# EUROPEAN PATENT APPLICATION

(11) **EP 4 353 452 A1**
(43) Date of publication of application: **17.04.2024**
(21) Application number: 22200859.1
(22) Date of filing: 11.10.2022
(51) Int. Cl.: B29C 64/386, B33Y 50/00, B33Y 80/00

(54) **AN ARTICLE FORMED BY RESPECTIVE LAYERS**

(71) Applicant: CREATE IT REAL A/S, 9000 Aalborg (DK)
(72) Inventor: Gay, Jeremie Pierre, 9000 Aalborg (DK)
(74) Representative: Inspicos P/S

(57) **Abstract**

The invention relates to an article formed by respective layers stacked in a z-direction perpendicular to the respective layers. The article comprises a wall structure extending in the z-direction and formed by line segments of the respective layers, each of the line segments of the wall structure lengthwise extending in a longitudinal direction such that the wall structure also extends in the longitudinal direction. Parts of at least some of the line segments are shifted within the respective layers perpendicular to the longitudinal direction and relative to the line segments of neighbouring layers of the respective layers such that the wall structure protrudes perpendicular to the longitudinal direction and the z-direction alternatingly along the z-direction. The method further relates to a method of printing a wall structure, and a computer system for providing a wall structure.

## Description

### FIELD OF THE INVENTION

The present invention relates to an article formed by respective layers stacked in a z-direction perpendicular to the respective layers. Further, the invention relates to a method of printing a wall structure using a 3D printer and a computer system for providing a wall structure of an article formed by respective layers.

### BACKGROUND OF THE INVENTION

In the field of 3D printing, also referred to as additive manufacturing, material is typically deposited, joined, or solidified in line segments to shape an article.

Some conventional methods, systems, and materials used in additive manufacturing have constraints regarding the cross-sectional width by which line segments can be produced. In particular, it is often not possible to manufacture lines with a cross-sectional width below a certain minimum line width, depending on, e.g., methods and materials. Such a minimum line width thereby restricts the structures which can be printed via additive manufacturing.

When employing additive manufacturing, it can be desirable to produce articles which have certain properties, such as particular compressive or elastic properties. The existence of a minimum line width restraints such properties. For example, an article is printed with interior infill comprising wall structures to provide sufficient stability of the article, but due to the cross-sectional line width of the line segments forming the wall structures, the article cannot be provided with desired compressive properties.

Hence, there is a need for improved or alternative approaches of providing articles by 3D printing.

### SUMMARY OF THE INVENTION

On the above background, it is an object of preferred embodiments of the invention to provide to improved flexibility with regards to articles and methods constrained by minimum line widths. In particular, it is an object of preferred embodiments to enable an increased range of potential compressive properties of articles having wall structures. For example, it is an object of some preferred embodiments to provide a reduced hardness of articles despite constraints imposed by minimum line widths.

A first aspect of the present invention relates to an article formed by respective layers stacked in a z-direction perpendicular to the respective layers,
the article comprising a wall structure extending in the z-direction and formed by line segments of the respective layers, each of the line segments of the wall structure lengthwise extending in a longitudinal direction such that the wall structure also extends in the longitudinal direction,
wherein parts of at least some of the line segments are shifted within the respective layers perpendicular to the longitudinal direction and relative to the line segments of neighbouring layers of the respective layers such that the wall structure protrudes perpendicular to the longitudinal direction and the z-direction alternatingly along the z-direction.

Typically, additive manufacturing relies on manufacturing articles by respective layers stacked in a z-direction to thereby form layered articles. The layers respectively comprise line segments which add up to form the article.

Preferred embodiments of the invention comprise a wall structure formed by line segments of the respective layers. Each of these line segments lengthwise extend in a longitudinal direction within the respective layers, and thereby the wall structure also extends in this longitudinal direction.

The provision of line segments which are shifted within the respective layers relative to line segments of neighbouring layers such that the wall structure protrudes alternatingly along the z-direction can reduce the overlap between line segments of the wall structure to thereby reduce the hardness of the wall structure in the z-direction. In turn, this enables line segments to be printed with a particular cross-sectional line width, while the wall structure formed by these line segments have compressive properties as if the line segments were printed with a reduced cross-sectional line width. In particular, the reduced overlap may reduce hardness of the wall structure in the z-direction. Thereby, articles and methods which suffer from a certain minimum line width have an increased range of potential compressive properties.

In addition, the provision of line segments which are shifted within the respective layers relative to line segments of neighbouring layers may potentially provide unique nonlinear compressional properties. In some embodiments, a compression of line segments in the z-direction tend to slightly enlarge the cross-sectional width of these line segments perpendicularly to the z-direction. In turn, this enlargement changes the relative contact between line segments of different layers. For example, if two neighbouring line segments have an overlap of 70 % in an uncompressed state, a particular compression may enlarge the line segments such that they have an overlap of 80 %. As a consequence, the restoring force acting against compression may increase in a non-linear manner. In practice, a result of this effect can be that wall structures according to the invention exhibit a maximum compression behaviour because the contact surface between neighbouring lines suddenly increases at a particular compression, i.e., a maximum compression. Thereby, shifting line segments within the respective layers relative to line segments of neighbouring layers can be employed to impose a non-linear compressional behaviour and/or establish a maximum compression.

The provision of line segments which are shifted within the respective layers relative to line segments of neighbouring layers may further serve as an approach for adding additional mass to an article or a wall structure.

An example of a wall structure protruding alternatingly along the z-direction is a wall structure in which every second line segments is shifted perpendicular to the longitudinal direction and the z-direction relative to the remaining line segments. In the resulting wall structure, the line segments then alternate between being shifted to one or the other direction when evaluating the line segments along the z-direction.

Applicable methods of 3D printing within the scope of the invention comprise fused deposition modelling, selective laser sintering, stereolithography, and selective laser melting.

In embodiments of the invention, the wall structure is a part of an infill region of the article.

Preferably, the wall structure is a part of an infill region of the article, in contrast to being part of an exterior surface of the article.

The provision of the wall structure being part of an infill region ensures that the compressive properties can be implemented without compromising an exterior surface of the article. The exterior surface may have to provide properties different from those required by an interior infill.

In embodiments of the invention, the wall structure has a tilt along the z-direction, the tilt being perpendicular to the longitudinal direction.

In other words, along the z-direction, the wall structure has a slope towards a direction perpendicular to the longitudinal direction and perpendicular to the z-direction. That is, different points of the wall structure along the z-direction have different coordinates in the direction perpendicular to the longitudinal direction and the z-direction. This tilt or slope is separate from the wall-structure protruding alternatingly along the z-direction.

In embodiments of the invention, the line segments have a minimum transversal overlap with line segments of neighbouring layers of the respective layers so as to form an effective wall thickness which corresponds to the minimum transversal overlap.

In embodiments of the invention, respective cross-sectional widths of the line segments of the respective layers are at least at a minimum line width of the line segments, wherein the effective wall thickness is less than the minimum line width.

In embodiments of the invention, the minimum line width is at least 0.6 mm, for example at least 0.8 mm, such as at least 1.0 mm.

In embodiments of the invention, a ratio of the effective wall thickness to the minimum line width is from 0.2 to 0.9, for example from 0.3 to 0.8, such as from 0.4 to 0.7.

The minimum transversal overlap may for example be a representation of the overlap of the line segments of the wall structure perpendicular to the longitudinal direction and the z-direction, where this overlap is evaluated based on a projection along a direction in which the line segments are stacked. The direction in which the line segments are stacked may for example be the z-direction. However, this is not always the case since, in some embodiments, the wall structure has a tilt, and accordingly, the line segments are not stacked perfectly along the z-direction.

Thereby, the wall structure may have compressive properties as if it was printed with line segments having a cross-sectional line width corresponding to the effective wall thickness, despite the actual cross-sectional line width being greater than the effective wall thickness.

In embodiments of the invention, the respective cross-sectional widths of the line segments of the respective layers are the same.

In embodiments of the invention, the line segments are shifted by a shift distance within the respective layers perpendicular to the longitudinal direction and relative to the line segments of neighbouring layers, wherein the shift distance is less than the minimum line width.

In embodiments of the invention, a ratio of the shift distance to the minimum line width is from 0.1 to 0.8, for example from 0.2 to 0.7, such as from 0.3 to 0.6.

The shift distance is in a direction perpendicular to the longitudinal direction and perpendicular to the z-direction.

In embodiments of the invention, a peak-to-peak width of the wall structure perpendicular to the longitudinal direction and the z-direction is less than twice the minimum line width.

In embodiments of the invention, a peak-to-peak width of the wall structure perpendicular to the longitudinal direction and the z-direction is at least twice the minimum line width.

The provision of a peak-to-peak width of the wall-structure which is less than twice the minimum line width may ensure a substantial overlap between the line segments and a substantial effective wall thickness, which is preferable in some embodiments.

In contrast, the provision of a peak-to-peak width of the wall structure which is at least twice the minimum line width may provide a very low hardness of the article, which is preferable in some other embodiments.

In embodiments of the invention, the line segments are shifted within a shift region along the longitudinal direction, wherein the wall structure further comprises at least one non-shift region along the longitudinal direction in which the line segments are not shifted relative to line segments of neighbouring layers.

In embodiments of the invention, the shift region has several sub-regions along the longitudinal direction in which the line segments are shifted differently.

In embodiments of the invention, the sub-regions comprise a central shift region in which the line segments are shifted by a constant distance relative to the line segments of neighbouring layers, wherein the sub-regions further comprise at least one transitional region located on either side of the central shift region along the longitudinal direction, wherein the line segments of the at least one transitional region are gradually shifted relative to the line segments of neighbouring layers to thereby smoothly connect the central shift region with the at least one non-shift region.

The provision of wall structures comprising both a shift region and at least one non-shift region may enable wall structures and articles having differentiated compressive properties along, e.g., the longitudinal direction of the wall structure.

In embodiments of the invention, the wall structure protrudes perpendicular to the longitudinal direction and the z-direction alternatingly and periodically along the z-direction.

In this context, "periodically" may be understood as a "repeating at regular intervals". For example, the wall structure protrudes alternatingly along the z-direction with a line segment structure repeating at every second, third, fourth, or fifth layer of the respective layers.

In embodiments of the invention, every second line segment along the z-direction is shifted in the same direction relative to the line segments of neighbouring layers of the respective layers.

In embodiments of the invention, a material of the article is a thermoplastic material.

In embodiments of the invention, the article is 3D printed.

In embodiments of the invention, the article is a footwear insole or footwear inlay.

The compressive properties which may be provided by embodiments of the invention are particularly advantageous for footwear insoles or footwear inlays.

Such items require specific compressive properties which can be difficult to obtain using conventional methods, particularly conventional additive manufacturing methods.

In addition, the requirements of footwear insoles and inlays are individual and can thereby vary vastly between different people. Footwear insoles and inlays with a wall structure of line segments shifted within the respective layers alternatingly along the z-direction according to the invention may accommodate such individual requirements.

A second aspect of the invention relates to a method of printing a wall structure using a 3D printer, the method comprising the steps of:
printing line segments of respective layers stacked in a z-direction perpendicular to the respective layers, wherein the line segment form a wall-structure extending in the z-direction, wherein each of the line segments of the wall structure lengthwise extend in a longitudinal direction such that the wall structure also extends in the longitudinal direction; and
shifting parts of at least some of the line segments within the respective layers perpendicular to the longitudinal direction and relative to the line segments of neighbouring layers of the respective layers such that the wall structure protrudes perpendicular to the longitudinal direction and the z-direction alternatingly along the z-direction, wherein the line segments are shifted as a part of the step of printing the line segments.

Methods of printing according to the above-described aspect may provide articles with improved compressive properties without being restricted by a particular minimum line width.

In embodiments of the invention, the method comprises a step of providing a target hardness, wherein the line segments are shifted during the step of printing the line segments to provide the wall structure with the target hardness in the z-direction.

A target hardness may for example be provided by a user.

The amount by which line segments are to be shifted to provide a given target hardness may for example be calculated starting from the hardness of a wall structure in which line segments are not shifted. A hardness can be measured via, e.g., a Shore hardness scale such as a Shore hardness type A scale. As an example, a wall structure in which line segments are not shifted is measured to have a hardness of 60A. For such a given hardness, the effective hardness of a wall structure in which the line segments are shifted may be approximated by assuming a linear relationship between shift distance and effective hardness. Assuming that all line segments have the same cross-sectional width, that the line segments alternate between being shifted to one or the other direction when evaluating the line segments along the z-direction, and that the shift distance is the same for all line segments, then the effective hardness is well-approximated by 60A x (1 - d/w), where d is the shift distance and w is the cross-sectional width. That is, if the shift distance is 0, then the effective hardness is 60A, if the shift distance is a third of the cross-sectional width, then the effective hardness is 40A, if the shift distance is half of the cross-sectional width, then the effective hardness is 30A, etc.

This above example merely serves as one possible approach by which a shift distance can be selected based on a desired target hardness. Alternatively, via a series of hardness measurements performed for various shift distances, a relationship between hardness and shift distance may be established, for example via an empirical polynomial fit.

By measurements or approximation, the determination of a shift distance based on a target hardness can also take into account non-linear behaviour and/or a maximum compression.

In embodiments of the invention, the method comprises a step of providing a target wall thickness, wherein the line segments are shifted during the step of printing the line segments such that the line segments have a minimum transversal overlap with line segments of neighbouring layers of the respective layers so as to form an effective wall thickness which corresponds to the minimum transversal overlap, wherein the effective wall thickness is substantially similar to the target wall thickness.

By having a step of providing a target wall hardness and/or a step of providing a target hardness, it may be possible for the user to obtain complex wall structures with particular compressive properties based on a simple instruction or input.

In embodiments of the invention, the wall structure is the wall structure of an article according to the first aspect of the present disclosure.

A third aspect of the invention relates to a computer system for providing a wall structure of an article formed by respective layers stacked in a z-direction perpendicular to the respective layers, the computer system comprising:
a wall structure design block configured to digitally establish the wall structure such that the wall structure extends in the z-direction and is formed by line segments of the respective layers, each of the line segments of the wall structure lengthwise extending in a longitudinal direction such that the wall structure also extends in the longitudinal direction,
the wall structure design block further configured to digitally shift parts of at least some of the line segments within the respective layers perpendicular to the longitudinal direction and relative to the line segments of neighboring layers of the respective layers such that the wall structure protrudes perpendicular to the longitudinal direction and the z-direction alternatingly along the z-direction; and
a wall structure transmission block configured to transmit a representation of the wall structure as digitally established by the wall structure design block to a 3D printer for printing the wall structure.

A computer system according to the above-described aspect may facilitate straightforward manufacturing of articles with improved compressive properties without being restricted to a particular line width.

A computer system for providing a wall structure of an article according to the present disclosure may typically rely on software operating via conventional well-known computer hardware, such as a processing unit, computer memory, computer storage, etc. Alternatively, the computer system may operate via distributed and/or cloud computation.

In case of the present invention, preferred embodiments of the computer system are based on various computerized blocks, which combine to form at least part of a software for designing, and thereby providing, a wall structure of an article. A wall structure design block establishes the wall structure and digitally shifts parts of at least some of the line segments, and a wall structure transmission block transmits a representation of the wall structure to a 3D printer. Optionally, embodiments of the invention may further comprise, e.g., a user input block in which a user can input a target hardness, of a target wall thickness. In practice, blocks may be implemented as a single program, or distributed across multiple computer programs or functions configured to operate in combination.

In embodiments of the invention, the computer system further comprises the 3D printer, wherein the 3D printer is configured to print the article comprising the wall structure, for example according to the second aspect of the present disclosure.

In embodiments of the invention, the computer system comprises a user input block in which a user can input a target hardness, wherein the wall structure design block is further configured to digitally shift the line segments to provide the wall structure with the target hardness in the z-direction.

In embodiments of the invention, the computer system comprises a user input block in which a user can input a target wall thickness, wherein the wall structure design block is further configured to digitally shift the line segments such that the line segments have a minimum transversal overlap with line segments of neighbouring layers of the respective layers so as to form an effective wall thickness which corresponds to the minimum transversal overlap, wherein the effective wall thickness is substantially similar to the target wall thickness.

The provision of a user input block in which a user can input a target hardness or a target wall thickness may enable quick and straightforward establishment of complex wall structures based on simple user input.

### BREIF DESCRIPTION OF THE DRAWIGNS

Embodiments of the invention will now be further described by reference to the accompanying drawings, in which:
Fig. 1 illustrates 3D printing of an article via fused deposition modelling,
Fig. 2a-b illustrate a wall structure according to prior art,
Fig. 3a-b illustrate a wall structure according to an embodiment of the invention,
Fig. 4a-c illustrate additional exemplary wall structures according to embodiments of the invention,
Fig. 5a-e illustrate a wall structure with sub-regions in which line segments are shifted differently,
Fig. 6a-b illustrate compression of a wall structure,
Fig. 7 illustrates method steps according to an embodiment of the invention,
Fig. 8 illustrates a cutaway view of an article comprising wall structures according to embodiments of the invention, and
Fig. 9 schematically illustrates a computer system for providing a wall structure of an article.

### DETAILED DESCRIPTION

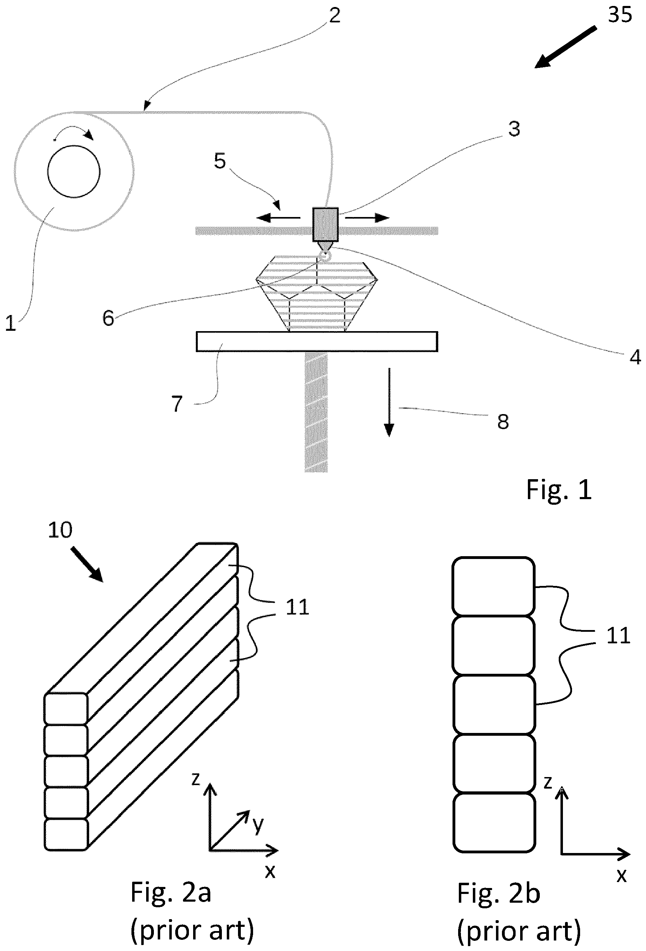

Fig. 1 illustrates 3D printing of an article via fused deposition modelling (FDM). A printer configured to print via FDM may be referred to as an extrusion-based printer. The illustrated printer 35 comprises a filament supply 1 in the form of a spool of thermo-polymer filament. The filament 2 is supplied by a feeding motor (not shown) to an extruder 3. The feeding motor is controlled according to a computer-based program comprising series of commands or actions which, when executed correctly, provide a printed article. This series of commands or actions may also be referred to as a tool command. The extruder 3 comprises a nozzle 4 and an electrical heater (not shown). The heater is also controlled via the tool command. In this embodiment, the tool is constituted by the filament supply and the extruder including the nozzle and heater, and the shape defining structure is the nozzle 4. The extruder 3 is fixed to a motion structure which can move the extruder 3, heater, and nozzle 4 in two (horizontal) directions of a Cartesian space illustrated by the arrow 5.

The shape defining structure of the tool, i.e., in this case the nozzle 4, has a tool position, and the tool position determines the corresponding adding-position 6 where the material, i.e., melted filament, is added. The tool command controls the movement of the nozzle 4 and thereby of the adding position 6. Thereby, the illustrated FDM printer 35 as capable of printing an article. One layer of the article is printed at a time, and when one layer is finished, the stage 7 is moved downwards as indicated by the arrow 8. The stage 8 may alternatively be referred to as a base plate or a print plate.

Fig. 2a-b illustrate a wall structure 10 according to prior art, where Fig. 2a displays the wall structure 10 in an angled view and Fig. 2b illustrates a cross-sectional view of the wall structure 10. Both views of the wall structure are provided together with a coordinate system.

Line segments 11 constitute the wall structure 10. Each of the line segments 11 resides in a separate respective layer. The lines segments 11 are stacked in a z-direction perpendicular to the respective layers. Moreover, each line segment 11 lengthwise extends in a longitudinal direction, i.e., in the direction of the y-axis of the illustrated coordinate system. Thereby, the wall structure 10 also extends in the longitudinal direction.

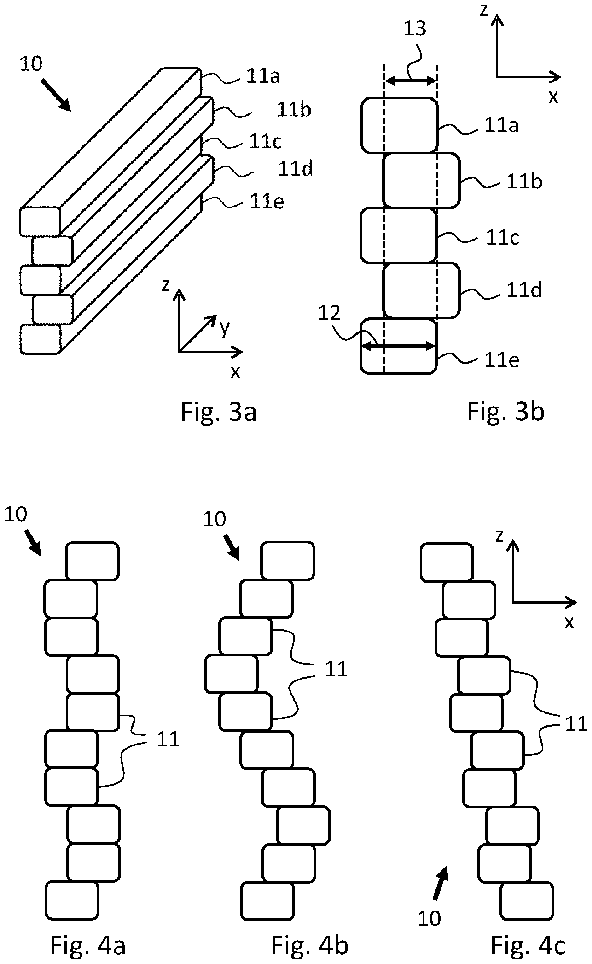

Fig. 3a-b illustrate a wall structure 10 according to an embodiment of the invention, where Fig. 3a displays the wall structure 10 in an angled view and Fig. 3b illustrates a cross-sectional view of the wall structure 10.

Both views of the wall structure are provided together with a coordinate system having an x-axis, a y-axis, and a z-axis. In the present disclosure, the direction of the z-axis is generally referred to as the z-direction, the direction of the y-axis is generally referred to as the longitudinal direction, and the direction of the x-axis is generally referred to as a direction perpendicular to the longitudinal direction and the z-direction. Alternatively, the direction of the x-axis may be referred to as a transversal direction.

The wall structure 10 is a part of an article formed by respective layers, such as a 3D printed article. However, only the wall structure 10 is illustrated so as to not obscure the illustration with unnecessary details. The layers of the article are stacked in the z-direction, which is perpendicular to the respective layers of the article.

The wall structure 10 is formed by line segments 11a-e of the respective layers. Each of the lines segments of the wall structure 10 is of a separate layer of the respective layers. Due to the stacking of the line segments 11a-e, the wall structure 10 extends in the z-direction.

Each of the line segments 11a-e lengthwise extend in the longitudinal direction such that the wall structure 10 also extends in that longitudinal direction, i.e., along the y-axis of the illustration.

In this embodiment, the line segments 11a-e are shifted within the respective layers perpendicular to the longitudinal direction and relative to line segments of neighbouring layers. The direction in which the line segments are shifted relatively is along the direction of the x-axis, which in the illustration indeed corresponds to being shifted within the respective layers and perpendicular to the longitudinal direction. Due to the relative shift of line segments 11a-e, the wall structure 10 protrudes perpendicular to the longitudinal direction and the z-direction (i.e., protrudes along the x-axis) alternatingly along the z-direction.

Specifically, the illustrated wall structure comprises five line segments 11a-e, which from top to bottom can be referred to as a first line segment 11a, a second line segment 11b, a third line segment 11c, a fourth line segment 11d, and a fifth line segment 11e. The first line segment 11a is shifted to the left-hand side (of the illustration) relative to the neighbouring second line segment 11b. The second line segment 11b is shifted to the right-hand side relative to the neighbouring first and third line segments 11a,11c. The third line segment 11c is shifted to the left-hand side relative to the neighbouring second and fourth line segments 11b,11d. The fourth line segment 11d is shifted to the right- hand relative to the neighbouring third and fifth line segments 11c,11e. And finally, the fifth line segment is shifted to the left-hand side relative to the neighbouring fourth line segment 11d.

The illustration only displays a part of the different line segments 11a-e. In practice, the line segments 11a-e can extend further in the longitudinal direction. The relative shift among the non-illustrated parts of the line segments can be different than in the illustrated parts of the line segments.

In Fig. 3b, illustrating a cross-sectional view of the wall structure 10, an effective wall thickness 13 is further indicated by a horizontal arrow extending between dashed lines. These dashed lines are defined by the minimum transversal overlap between the different line segments. This transversal overlap is in turn based on the transversal extent of the individual line segments. Namely, the minimum transversal overlap is a representation of the overlap of the line segments in the transversal direction (i.e., the direction of the x-axis) evaluated in (for example, projected in) the direction in which the line segments are stacked (i.e., the z-direction in this specific embodiment).

As evident from the illustration, this effective wall thickness 13 is less than the minimum line width 12 of the line segments 11a-e indicated at the bottommost line segment 11e. As a result, the compressive properties of the wall structure 10 are different than if the line segments 10a-e did not have a relative shift.

Fig. 4a-c illustrate additional exemplary wall structures 10 according to embodiments of the invention. Each of the subfigures corresponds to a cross-sectional view of a wall structure 10 illustrated in a manner similar to the cross-sectional view provided by Fig. 3b. However, the line segments 11 are stacked in a different way in each subfigure of Fig. 4a-c so as to provide alternative embodiments. Fig. 4c is illustrated with a coordinate system which applies to each of the subfigures.

In Fig. 4a, line segments 11 are shifted relative to line segments of neighbouring layers in a pairwise manner. In comparison with the shifting pattern in Fig. 3b, the shifting pattern in Fig. 4a provides a greater hardness given the same relative shift or effective wall thickness.

In Fig. 4b, the line segments 11 are shifted such that a peak-to-peak width of the wall structure 10 in the transversal direction is greater than twice the minimum line width of the line segments 11. As a result, the wall structure has a very low hardness.

In Fig. 4c, the wall structure 10 has a tilt along the z-direction, wherein the tilt is perpendicular to the longitudinal direction. In other words, the line segments are stacked in a direction different from the z-direction, albeit only slightly different. Hence, the concept of relative shifts among line segments to provide a wall structure protruding alternatingly along the z-direction can be superimposed onto other line segment patterns to provide a combination of properties in single wall structure.

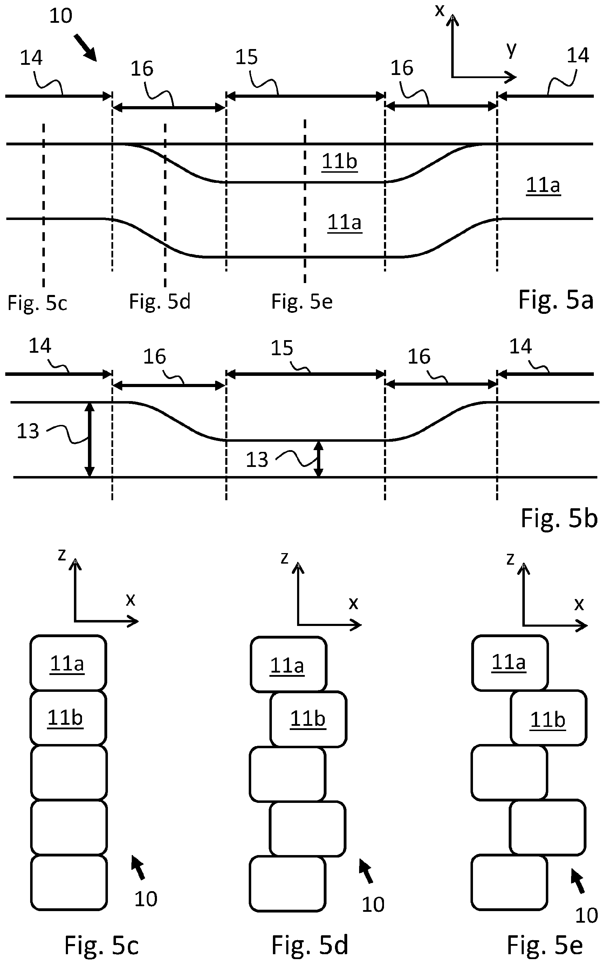

Fig. 5a-e illustrate a wall structure with sub-regions 14,15,16 in which line segments 11a-b are shifted differently. More specifically, Fig. 5a provides a top-view of the wall structure 10 in which two line segments 11a-b are visible. Vertical dashed lines labelled with "Fig. 5c", "Fig. 5d", and "Fig. 5e", indicate planes in which cross-sectional views of the wall structure is provided in Fig. 5c-e. Fig. 5b illustrates the effective wall thickness 13 along the longitudinal direction of the wall structure 10.

Referring again to Fig. 5a, a top view of the wall structure 10 is provided. Along the longitudinal direction (direction of y-axis), the wall structure is divided into different sub-regions 14,15,16. The outermost sub-regions 14 are non-shift regions 14 in which line segments 11a-b are not shifted relative to each other. Centrally, a central shift region 15 is located, in which line segments 11a-b are shifted by a constant relative distance. Between the non-shift regions 14 and the central shift region 15, transitional regions 16 are located in which line segments 11a-b are gradually shifted relative to line segments of neighbouring layers to smoothly connect the central shift region 15 to the non-shift regions 14.

In the top view of Fig. 5a, the uppermost line segment 11a obstructs the view of other line segments in the non-shift regions 14. In the central shift region 15, the uppermost line segment 11a is shifted such that the line segment 11b just below is visible. This perspective is supported by the cross-sectional views in Fig. 5c-e. In Fig. 5c, corresponding to a non-shift region 14, the line segments are not shifted relative to line segments of neighbouring layers. In contrast, in Fig. 5e corresponding to the central shift region 15, the line segments are indeed shifted relative to line segments of neighbouring layers. In Fig. 5d, corresponding to a transitional region 16, the lien segments are also shifted relative to line segments of neighbouring layers, but by a smaller shift distance than in the central shift region 15.

As a result of the different shifts in the different sub-regions 14,15,16, the effective wall thickness 13 also differs along the longitudinal direction of the wall structure. Fig. 5b illustrates the effective wall thickness along the wall structure illustrated in Fig. 5a. The sub-regions 14,15,16 of Fig. 5a are once again indicated in Fig. 5b by identical labels, arrows, and vertical dashed lines. The effective wall thickness 13 itself is indicated by the vertical distance between the two full-drawn lines extending in the horizontal direction in the figure.

In the non-shift regions 14, the effective wall thickness 13 corresponds to the (minimum) line width of the line segments of the wall structure 10. In the central shift region 15, the effective wall thickness 13 is significantly less than the line width of the line segments due to the relative shift among neighbouring line segments. In the transitional regions 16, the effective wall thickness 13 gradually changes to smoothly connect the effective wall thickness 13 of the central shift region 15 with the effective wall thickness 13 of the non-shift regions 14.

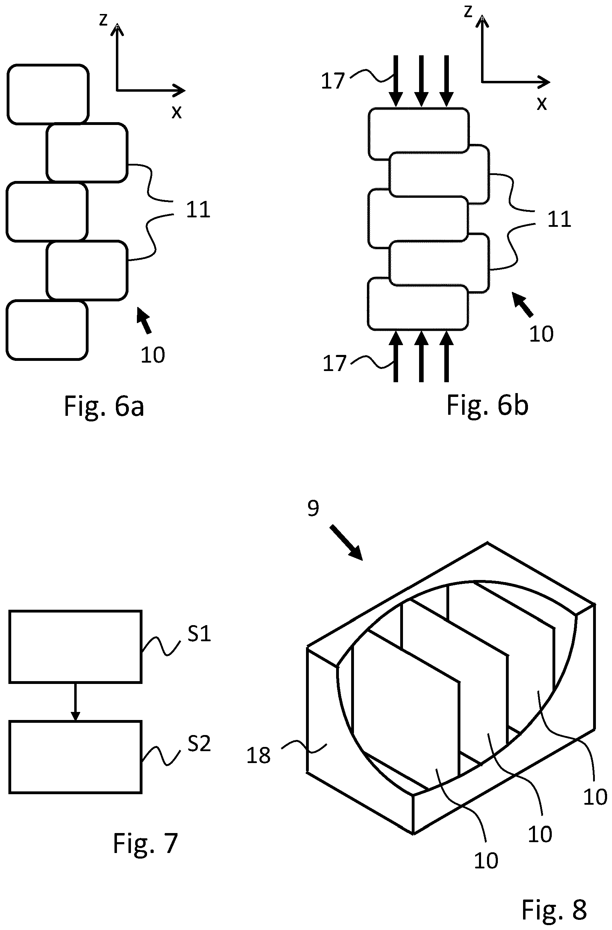

Fig. 6a-b illustrate compression of a wall structure 10. In Fig. 6a, a cross-sectional view of the wall structure 10 is provided without any compression to the wall structure. In Fig. 6b, the same cross-sectional view is provided, but now with a compression applied to the wall structure 10 along the z-direction. The compression is applied by a compression force 17 applied to the top and bottom of the wall structure 10. As a consequence, the wall structure 10 is deformed. However, note that deformation effects in the drawing are exaggerated for illustrative purposes. Nevertheless, embodiments of the invention are not restricted to any particular type or magnitude of compression and compressional effects.

By comparison between Fig. 6a and 6b, it can be seen that compression forces 17 in the z-direction results in a slight enlargement of the line segments in the transversal direction perpendicular to the z-direction, which in turn changes the relative contact surface between the different line segments 11. Further, the parts of the line segments which protrude tend to wrap slightly around neighbouring line segments.

As a consequence, the nonlinear compressional effects are enhanced for sufficiently large compression forces 17. A maximum compression behaviour may, for example, be exhibited.

Fig. 7 illustrates method steps according to an embodiment of the invention. The method relates to printing a wall structure using a 3D printer.

In a first step S1, line segments of respective layers are printed. The respective layers are stacked in a z-direction perpendicular to the respective layers. The line segments are printed to form a wall-structure extending in the z-direction. Moreover, each of the lines segments lengthwise extend in a longitudinal direction such that the wall structure also extends in the longitudinal direction.

In a next step S2, parts of at least some of the line segments are shifted within the respective layers perpendicular to the longitudinal direction and relative to the line segments of neighbouring layers of the respective layers. Further, the parts of at least some of the line segments are shifted such that the wall structure protrudes perpendicular to the longitudinal direction and the z-direction alternatingly along the z-direction. The line segments are shifted as a part of the step of printing the line segments.

Note that typically, these two steps S1-S2 are performed at least partly simultaneously, particularly since the line segments are shifted as a part of the step of printing the line segments.

In other embodiments, the method further comprises a step of providing a target hardness or a step of providing a target wall thickness.

Fig. 8 illustrates a cutaway view of an article 9 comprising wall structures 10 according to embodiments of the invention.

The article 9 comprises an exterior surface 18 and an interior infill. The interior infill consists of wall structures 10. One or more of these wall structures 10 are formed as illustrated in and described in relation to Fig. 3a-b. The exterior surface 18 surrounds to interior infill.

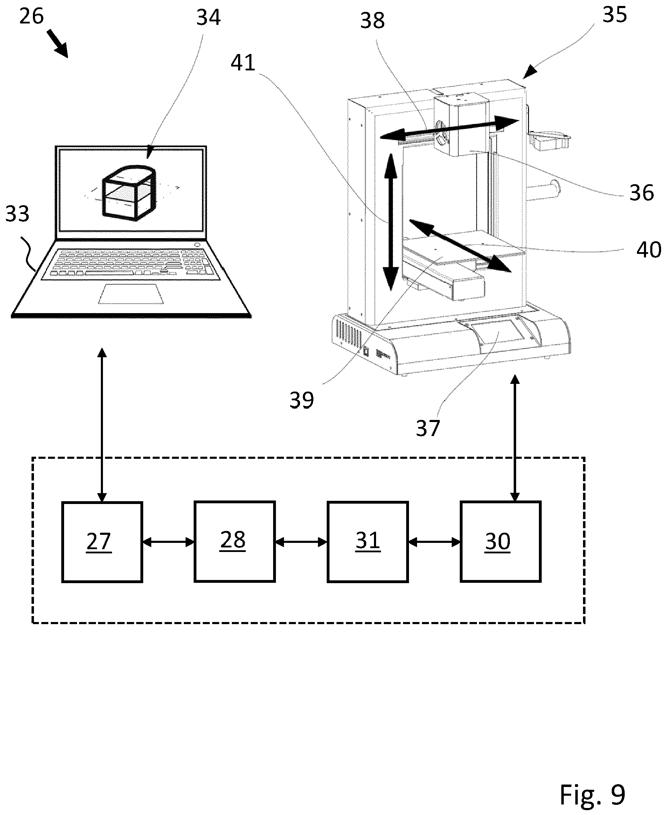

Fig. 9 schematically illustrates a computer system 26 for providing a wall structure of an article according to an embodiment of the invention.

The embodiment comprises a computer 33 configured to automatically generate a digital wall structure representation 31 and transmit it to a 3D printer 35, which in turn is configured to print an article based on digital models or instructions received from the computer 33.

The automated generation and transmission of the digital wall structure representation is based on computerized blocks 27,28,30, which form part of a software for generating digital layouts of articles to be printed by a 3D printer.

The computer system comprises a user input block 27 through which a user can provide input upon which a wall structure design block 28 automatically generates the digital wall structure representation 31. In this embodiment, the system 26 is configured such that the user can provide a target hardness which the user intents an eventually printed article to have in a z-direction of that article, i.e., perpendicular to the planes of the layers of the printed article. The computer 33 comprises a user interface 34 through which a user can provide input such as this target hardness.

When the target hardness is provided, the wall structure design block automatically digitally establishes the wall structure representation 31. This representation 31 is indicative of relative positioning of line segments of respective layers of an article to be printed such that at least some of the line segments are shifted within the respective layers perpendicular to the longitudinal direction of the line segments and shifted relative to the line segments of neighbouring layers of the respective layers such that the wall structure protrudes perpendicular to the longitudinal direction and the z-direction and alternatingly along the z-direction (once the article is printed).

The wall structure design block 28 has access to a model of how the hardness of an article depends on the relative shift or shift distance of line segments in a wall structure. When a particular target hardness is provided, the computer system uses this model to obtain a relative shift or shift distance of the digital wall structure representation 31 which provides the intended target hardness to the article once it is printed. Thereby, the digital wall structure representation 31 is automatically established based on the target hardness.

When the digital wall structure representation 31 has been established by the wall structure design block 28, the representation 31 is transmitted to the 3D printer 35 by the wall structure transmission block 30. The representation is transmitted in a format in which it is readable by the 3D printer 35, for example as G-code, upon which the 3D printer 35 can print an article.

The 3D printer 35 comprises a printer controller 37 configured to control the functionalities of the printer required to print articles, such as extrusion, heating, and motion. Upon receiving an adequate digital wall structure representation from the wall structure transmission block 30, the printer 35 can proceed to print an article accordingly. Naturally, articles to be printed often comprise additional parts in addition to a single wall structure, which can similarly be transmitted to the printer 35.

The illustrated printer 35 is extrusion based. It comprises a printer head 36 from which material is deposited. The relative position at which material is deposited is controlled by moving the printer head 36 on an x-axis 38, or moving the print bed 39 on a y-axis 40, or a z-axis 41. Thereby, independent control of three axes 38,40,41 of a cartesian coordinates system is provided, allowing for creation of any arbitrary three-dimensional path. The actual positioning is accomplished using timing belts, pulleys, and stepper motors operated in an open loop configuration via the printer controller 37.

The printer x-axis 38, printer y-axis 40, and printer z-axis 41 do not necessarily correspond to the x-axis, y-axis, and z-axis illustrated in previous figures in relation to wall structures according to the invention.

Note that, although various examples of wall structures have been illustrated, with a straight non-bending lengthwise extension in a longitudinal direction, embodiments of the invention are not restricted to line segments and wall structures which do not bend. A wall structure or a line segment with some curvature can still extend lengthwise in a longitudinal direction.

### List of figure references:

- 1: filament supply
- 2: filament
- 3: extruder
- 4: nozzle
- 5: arrow indicative of motion structure movement
- 6: adding position where material is added
- 7: stage
- 8: arrow indicative of stage movement
- 9: article
- 10: wall structure
- 11: line segment
- 12: cross-sectional width
- 13: effective wall thickness
- 14: non-shift region
- 15: central shift region
- 16: transitional region
- 17: compression force
- 18: exterior surface

- 26: computer system
- 27: user input block
- 28: wall structure design block

- 30: wall structure transmission block
- 31: digital wall structure representation

- 33: computer
- 34: user interface
- 35: 3D printer
- 36: printer head
- 37: printer controller
- 38: printer x-axis
- 39: print bed
- 40: printer y-axis
- 41: printer z-axis

- S1-S2: method steps

### LIST OF NUMBERED EMBODIMENTS

1. An article formed by respective layers stacked in a z-direction perpendicular to the respective layers,
   the article comprising a wall structure extending in the z-direction and formed by line segments of the respective layers, each of the line segments of the wall structure lengthwise extending in a longitudinal direction such that the wall structure also extends in the longitudinal direction,
   wherein parts of at least some of the line segments are shifted within the respective layers perpendicular to the longitudinal direction and relative to the line segments of neighbouring layers of the respective layers such that the wall structure protrudes perpendicular to the longitudinal direction and the z-direction alternatingly along the z-direction.
2. The article according to embodiment 1, wherein the wall structure is a part of an infill region of the article.
3. The article according to any of the preceding embodiments, wherein the wall structure has a tilt along the z-direction, the tilt being perpendicular to the longitudinal direction.
4. The article according to any of the preceding embodiments, wherein the line segments have a minimum transversal overlap with line segments of neighbouring layers of the respective layers so as to form an effective wall thickness which corresponds to the minimum transversal overlap.
5. The article according to embodiment 4, wherein respective cross-sectional widths of the line segments of the respective layers are at least at a minimum line width of the line segments, wherein the effective wall thickness is less than the minimum line width.
6. The article according to any of embodiments 4-5, wherein the minimum line width is at least 0.6 mm, for example at least 0.8 mm, such as at least 1.0 mm.
7. The article according to any of embodiments 4-6, wherein a ratio of the effective wall thickness to the minimum line width is from 0.2 to 0.9, for example from 0.3 to 0.8, such as from 0.4 to 0.7.
8. The article according to any of embodiments 5-7, wherein the respective cross-sectional widths of the line segments of the respective layers are the same.
9. The article according to any of the preceding embodiments, wherein the line segments are shifted by a shift distance within the respective layers perpendicular to the longitudinal direction and relative to the line segments of neighbouring layers, wherein the shift distance is less than the minimum line width.
10. The article according to embodiment 9, wherein a ratio of the shift distance to the minimum line width is from 0.1 to 0.8, for example from 0.2 to 0.7, such as from 0.3 to 0.6.
11. The article according to any of the preceding embodiments, wherein a peak-to-peak width of the wall structure perpendicular to the longitudinal direction and the z-direction is less than twice the minimum line width.
12. The article according to embodiment 11, wherein a peak-to-peak width of the wall structure perpendicular to the longitudinal direction and the z-direction is at least twice the minimum line width.
13. The article according to any of the preceding embodiments, wherein the line segments are shifted within a shift region along the longitudinal direction, wherein the wall structure further comprises at least one non-shift region along the longitudinal direction in which the line segments are not shifted relative to line segments of neighbouring layers.
14. The article according to embodiment 13, wherein the shift region has several sub-regions along the longitudinal direction in which the line segments are shifted differently.
15. The article according to embodiment 14, wherein the sub-regions comprise a central shift region in which the line segments are shifted by a constant distance relative to the line segments of neighbouring layers, wherein the sub-regions further comprise at least one transitional region located on either side of the central shift region along the longitudinal direction, wherein the line segments of the at least one transitional region are gradually shifted relative to the line segments of neighbouring layers to thereby smoothly connect the central shift region with the at least one non-shift region.
16. The article according to any of the preceding embodiments, wherein the wall structure protrudes perpendicular to the longitudinal direction and the z-direction alternatingly and periodically along the z-direction.
17. The article according to any of the preceding embodiments, wherein every second line segment along the z-direction is shifted in the same direction relative to the line segments of neighbouring layers of the respective layers.
18. The article according to any of the preceding embodiments, wherein a material of the article is a thermoplastic material.
19. The article according to any of the preceding embodiments, wherein the article is 3D printed.
20. The article according to any of the preceding embodiments, wherein the article is a footwear insole or footwear inlay.
21. A method of printing a wall structure using a 3D printer, the method comprising the steps of:
   printing line segments of respective layers stacked in a z-direction perpendicular to the respective layers, wherein the line segment form a wall-structure extending in the z-direction, wherein each of the line segments of the wall structure lengthwise extend in a longitudinal direction such that the wall structure also extends in the longitudinal direction; and
   shifting parts of at least some of the line segments within the respective layers perpendicular to the longitudinal direction and relative to the line segments of neighbouring layers of the respective layers such that the wall structure protrudes perpendicular to the longitudinal direction and the z-direction alternatingly along the z-direction, wherein the line segments are shifted as a part of the step of printing the line segments.
22. The method according to embodiment 21, wherein the method comprises a step of providing a target hardness, wherein the line segments are shifted during the step of printing the line segments to provide the wall structure with the target hardness in the z-direction.
23. The method according to any of embodiments 21-22, wherein the method comprises a step of providing a target wall thickness, wherein the line segments are shifted during the step of printing the line segments such that the line segments have a minimum transversal overlap with line segments of neighbouring layers of the respective layers so as to form an effective wall thickness which corresponds to the minimum transversal overlap, wherein the effective wall thickness is substantially similar to the target wall thickness.
24. The method according to any of embodiments 21-23, wherein the wall structure is the wall structure of an article according to any of embodiments 1-20.
25. A computer system for providing a wall structure of an article formed by respective layers stacked in a z-direction perpendicular to the respective layers, the computer system comprising:
   a wall structure design block configured to digitally establish the wall structure such that the wall structure extends in the z-direction and is formed by line segments of the respective layers, each of the line segments of the wall structure lengthwise extending in a longitudinal direction such that the wall structure also extends in the longitudinal direction,
   the wall structure design block further configured to digitally shift parts of at least some of the line segments within the respective layers perpendicular to the longitudinal direction and relative to the line segments of neighboring layers of the respective layers such that the wall structure protrudes perpendicular to the longitudinal direction and the z-direction alternatingly along the z-direction; and
   a wall structure transmission block configured to transmit a representation of the wall structure as digitally established by the wall structure design block to a 3D printer for printing the wall structure.
26. The computer system according to embodiment 25, wherein the computer system further comprises the 3D printer, wherein the 3D printer is configured to print the article comprising the wall structure, for example according to any of embodiments 21-24.
27. The computer system according to any of embodiments 25-26, wherein the computer system comprises a user input block in which a user can input a target hardness, wherein the wall structure design block is further configured to digitally shift the line segments to provide the wall structure with the target hardness in the z-direction.
28. The computer system according to any of embodiments 25-27, wherein the computer system comprises a user input block in which a user can input a target wall thickness, wherein the wall structure design block is further configured to digitally shift the line segments such that the line segments have a minimum transversal overlap with line segments of neighbouring layers of the respective layers so as to form an effective wall thickness which corresponds to the minimum transversal overlap, wherein the effective wall thickness is substantially similar to the target wall thickness.

## Claims

1. An article (9) formed by respective layers stacked in a z-direction perpendicular to the respective layers,
the article (9) comprising a wall structure (10) extending in the z-direction and formed by line segments (11) of the respective layers, each of the line segments (11) of the wall structure (10) lengthwise extending in a longitudinal direction such that the wall structure (10) also extends in the longitudinal direction,
wherein parts of at least some of the line segments (11) are shifted within the respective layers perpendicular to the longitudinal direction and relative to the line segments (11) of neighbouring layers of the respective layers such that the wall structure protrudes perpendicular to the longitudinal direction and the z-direction alternatingly along the z-direction.

2. The article according to claim 1, wherein the wall structure is a part of an infill region of the article.

3. The article according to any of the preceding claims, wherein the line segments have a minimum transversal overlap with line segments of neighbouring layers of the respective layers so as to form an effective wall thickness which corresponds to the minimum transversal overlap.

4. The article according to claim 3, wherein respective cross-sectional widths of the line segments of the respective layers are at least at a minimum line width of the line segments, wherein the effective wall thickness is less than the minimum line width.

5. The article according to any of claims 3-4, wherein a ratio of the effective wall thickness to the minimum line width is from 0.2 to 0.9, for example from 0.3 to 0.8, such as from 0.4 to 0.7.

6. The article according to any of the preceding claims, wherein the line segments are shifted within a shift region along the longitudinal direction, wherein the wall structure further comprises at least one non-shift region along the longitudinal direction in which the line segments are not shifted relative to line segments of neighbouring layers.

7. The article according to claim 6, wherein the shift region has several sub-regions along the longitudinal direction in which the line segments are shifted differently.

8. The article according to claim 7, wherein the sub-regions comprise a central shift region in which the line segments are shifted by a constant distance relative to the line segments of neighbouring layers, wherein the sub-regions further comprise at least one transitional region located on either side of the central shift region along the longitudinal direction, wherein the line segments of the at least one transitional region are gradually shifted relative to the line segments of neighbouring layers to thereby smoothly connect the central shift region with the at least one non-shift region.

9. The article according to any of the preceding claims, wherein the article is a footwear insole or footwear inlay.

10. A method of printing a wall structure using a 3D printer, the method comprising the steps of:
printing line segments of respective layers stacked in a z-direction perpendicular to the respective layers, wherein the line segment form a wall-structure extending in the z-direction, wherein each of the line segments of the wall structure lengthwise extend in a longitudinal direction such that the wall structure also extends in the longitudinal direction; and
shifting parts of at least some of the line segments within the respective layers perpendicular to the longitudinal direction and relative to the line segments of neighbouring layers of the respective layers such that the wall structure protrudes perpendicular to the longitudinal direction and the z-direction alternatingly along the z-direction, wherein the line segments are shifted as a part of the step of printing the line segments.

11. The method according to claim 10, wherein the method comprises a step of providing a target hardness, wherein the line segments are shifted during the step of printing the line segments to provide the wall structure with the target hardness in the z-direction.

12. The method according to any of claims 10-11, wherein the wall structure is the wall structure of an article according to any of claims 1-9.

13. A computer system for providing a wall structure of an article formed by respective layers stacked in a z-direction perpendicular to the respective layers, the computer system comprising:
a wall structure design block configured to digitally establish the wall structure such that the wall structure extends in the z-direction and is formed by line segments of the respective layers, each of the line segments of the wall structure lengthwise extending in a longitudinal direction such that the wall structure also extends in the longitudinal direction,
the wall structure design block further configured to digitally shift parts of at least some of the line segments within the respective layers perpendicular to the longitudinal direction and relative to the line segments of neighboring layers of the respective layers such that the wall structure protrudes perpendicular to the longitudinal direction and the z-direction alternatingly along the z-direction; and
a wall structure transmission block configured to transmit a representation of the wall structure as digitally established by the wall structure design block to a 3D printer for printing the wall structure.

14. The computer system according to claim 13, wherein the computer system further comprises the 3D printer, wherein the 3D printer is configured to print the article comprising the wall structure, for example according to the method of any of claims 10-12.

15. The computer system according to any of claims 13-14, wherein the computer system comprises a user input block in which a user can input a target hardness, wherein the wall structure design block is further configured to digitally shift the line segments to provide the wall structure with the target hardness in the z-direction.
